# EUROPÄISCHE PATENTSCHRIFT

(11) **EP 1 136 704 B1**
(45) Veröffentlichungstag und Bekanntmachung des Hinweises auf die Patenterteilung: **21.07.2004**
(21) Anmeldenummer: 01102099.7
(22) Anmeldetag: 31.01.2001
(51) Int. Cl.: F16B 12/24, F16B 12/04

(54) **Verbindungselement**
Connector
Elément de connexion

(30) Priorität: 23.03.2000 DE 20005355 U
(43) Veröffentlichungstag der Anmeldung: 26.09.2001
(73) Patentinhaber: Hachtel, Steffen, 73650 Winterbach (DE); Holz, Albert, 73447 Oberkochen (DE); Hachtel, Friedrich, 73431 Aalen (DE)
(72) Erfinder: Hachtel, Steffen, 73650 Winterbach (DE); Holz, Albert, 73447 Oberkochen (DE); Hachtel, Friedrich, 73431 Aalen (DE)
(74) Vertreter: Möbus, Daniela, Dr.-Ing.

(56) Entgegenhaltungen:
- EP-A- 0 211 378
- EP-A- 0 309 790
- DE-A- 3 304 975
- DE-A- 19 612 910
- DE-U- 8 316 308
- DE-U- 29 902 493
- FR-A- 1 045 292
- GB-A- 2 169 371
- US-A- 3 883 258
- US-A- 4 822 202

## Beschreibung

Die Erfindung betrifft ein Verbindungselement, insbesondere für Holzverbindungen, mit einem Mittelstück und zwei Endstücken, wobei die beiden Endstücke mit ihrem Umfang bereichsweise über den Umfang des Mittelstücks vorstehen.

Aus der DE 299 02 493 U1 ist ein Verbindungselement, beispielsweise für Holzverbindungen, bestehend aus einem Mittelstück und zwei sich jeweils an das Mittelstück anschließenden Endstücken, bekannt. Das Verbindungselement verbindet zwei miteinander zu verbindende Teile ohne eine zusätzliche Verleimung.

Ist eine zusätzliche Verleimung gewünscht oder notwendig, so ist durch die Lehre von EP-A2-0 211 378 ein Verbindungselement bekannt, das eine durchgehende Längsbohrung aufweist. Jeweils im Endbereich dieses bekannten Verbindungselements kommuniziert die Längsbohrung mit einer Querbohrung, die in eine Ringprägung mündet. Über die Längsbohrung lässt sich Klebstoff von einer Seite des Verbindungselements auf die anderer Seite des Verbindungselements überführen. Eine Leimperle in einer bestimmten Dosierung wird in die für das Verbindungselement vorgesehene Bohrung eingebracht, und durch das Eintreiben oder Einschrauben des Verbindungselements in die Bohrung wird die Leimperle aufgedrückt und kann in die Längsbohrung einströmen. Eine Leim- oder Klebstoffkonzentrierung im Bereich der Trennebene ist mittels des bekannten Verbindungselements nicht vorgesehen.

Eine optimale Leimverteilung besonders im Bereich nahe der Trennebene der beiden miteinander zu verbindenden Bauteile ist jedoch für eine hohe Qualität der Verbindung, die vor allem auch durch die Dichtheit der Trennfuge zwischen den beiden zu verbindenden Teilen gekennzeichnet ist, ausschlaggebend. Die Fugendichtheit wird durch die Holzquellung stark beansprucht, weshalb die Leimverbindung zwischen den beiden zu verbindenden Bauteilen zuverlässig halten muss.

Die Erfindung hat die Aufgabe, ein Verbindungselement der eingangs genannten Art dahin gehend zu verbessern, dass eine ungleichmäßige Leimverteilung beim Einführen des Verbindungselements in die dafür vorgesehene Bohrung im Bauteil zukünftig im Bereich der Trennebene vermieden wird.

Die Erfindung löst die gestellte Aufgabe durch die Merkmale des Patentanspruchs 1. Durch den mindestens einen geschlossenen Kanal und die mindestens eine Nut zur Leimverteilung kann der Leim gezielt zu der gewünschten Stelle im Mittelstück, an der der Leim abbinden soll, geleitet werden.

Der mindestens eine geschlossene Kanal ist von einer in Längsrichtung des Verbindungselements verlaufenden Sackbohrung gebildet, die in ihrem Endbereich in mindestens einen radial nach außen verlaufenden Kanal mündet. Dadurch kann, nachdem das Verbindungselement in das Bauteil eingetrieben wurde, der Leim gezielt an die gewünschten Stelle zwischen dem Verbindungselement und der Wandung des Bohrlochs für das Verbindungselement geleitet werden.

Der Leim verteilt sich gut an der gewünschten Stelle in der Bohrung zwischen Verbindungselement und Bohrungswandung, wenn der mindestens eine nach außen verlaufende Kanal in eine außen umlaufende Nut mündet. Wenn mehrere nach außen mündende Kanäle vorgesehen sind oder ein nach außen verlaufender Kanal verzweigt, so können auch mehrere umlaufende Nuten versorgt werden.

Die mindestens eine umlaufende Nut befindet sich im Mittelbereich des Verbindungselements und verteilt den Leim gleichmäßig im Bereich der Trennebene zwischen den beiden miteinander zu verbindenden Bauteilen, an der aufgrund der möglichen Holzquellung eine besonders zuverlässige Klebeverbindung hergestellt werden muss.

Bevorzugt sind zwei umlaufende Nuten im Mittelstück ausgebildet.

Die Endstücke des Verbindungselements können Querrippen und/oder Noppen oder dergleichen aufweisen. Nachdem das eine Endstück des Verbindungselements in das erste Bauteil eingeleimt worden ist, können die Querrippen und/oder Noppen oder dergleichen des anderen Endstücks mit Leim eingestrichen werden und beim Einschieben des anderen Endstücks in das zweite Bauteil den Leim in die das Verbindungselement aufnehmende Bohrung transportieren. Außerdem erzeugen die Querrippen und/oder Noppen einen zusätzlichen Kraftschluss zwischen Verbindungselement und den zu verbindenden Bauteilen, sodass eine Weiterverarbeitung der Verbindung auch ohne völliges Aushärten des Leims möglich ist.

Besonders gut wird der Leim beim Einschieben des zweiten Endstücks in das zweite Bauteil in die das Verbindungselement aufnehmende Bohrung transportiert, wenn die Querrippen und/oder Noppen oder dergleichen an ihrer Oberfläche in Längsrichtung des Verbindungselements Nuten aufweisen.

Damit die beiden Endstücke beim Eintreiben des Verbindungselements in die dafür vorgesehene Bohrung nicht seitlich ausknicken können, können die beiden Endstücke jeweils einen massiven Kernbereich aufweisen. Dieser dient auch zur genaueren Aufnahme eines Montagewerkzeugs und ermöglicht einen Kraftfluss zum Eintreiben des Verbindungselements.

Die Endstücke können in radialer Richtung deformierbar sein, sodass die über das Mittelstück überstehenden Bereiche nach innen gedrückt und die dazwischenliegenden nicht überstehenden Bereiche an die Innenwand der Bohrung gepresst werden und somit die Anpresskraft zwischen dem Verbindungselement und der Bohrung des zu verbindenden Teils senkrecht auf die gegeneinander gepressten Flächen wirkt und somit zu einer maximalen Reibung führt.

Die Endstücke können hierzu zusätzlich zu der in den radial nach außen verlaufenden Kanal mündenden Sackbohrung mindestens eine weitere Sackbohrung aufweisen. Dadurch lassen sich die Seitenwände der beiden über den Umfang des Mittelstücks vorstehenden Endstücke in radialer Richtung beim Einschieben des Verbindungselements in die dafür vorgesehene Bohrung besser verformen.

Die Endstücke können einen im Wesentlichen dreieckigen Querschnitt aufweisen, wobei die Ecken der Endstücke seitlich über das Mittelstück herausstehen können. Beim Einführen des Verbindungselements in die Bohrung des zu verbindenden Bauteils werden dann die Ecken des Endstücks zusammengedrückt, wodurch die Seiten des Endstücks gegen die Innenwand der Bohrung gedrückt werden, was zu einer kraftschlüssigen Verbindung zwischen dem Verbindungselement und dem zu verbindenden Teil führt.

Um unterschiedliche Durchmesser der Aufnahmebohrungen für die beiden Endstücke des Verbindungselements und auch gegeneinander versetzte Aufnahmebohrungen mit Hilfe des Verbindungselements ausgleichen zu können, kann die Längsachse des Mittelstücks seitlich zu den Längsachsen der beiden Endstücke versetzt sein.

Zwecks einer erhöhten Reibung des Verbindlingselements in der Bohrung, kann das Verbindungselement mindestens bereichsweise eine raue Oberfläche aufweisen, die sich mit der Bohrongsinnenwand verzahnen kann.

Aus Gründen einer preiswerten Herstellung kann das Verbindungselement aus Kunststoff ausgeführt sein. Besonders gut ist beispielsweise POM, Polyamid oder Polycarbonat mit Holz verleimbar. Es ist jedoch auch jeder andere thermoplastische Kunststoff einsetzbar.

Nachfolgend wird ein Ausführungsbeispiel eines erfindungsgemäßen Verbindungselements anhand der beiliegenden Zeichnung näher erläutert.

Im Einzelnen zeigen:
- Fig. 1: eine Draufsicht auf ein erfindungsgemäßes Verbindungselement;
- Fig. 2: einen Längsschnitt durch eine Hälfte des Verbindungselements aus Fig. 1;
- Fig. 3: einen Querschnitt durch das Verbindungselement aus Fig. 1.

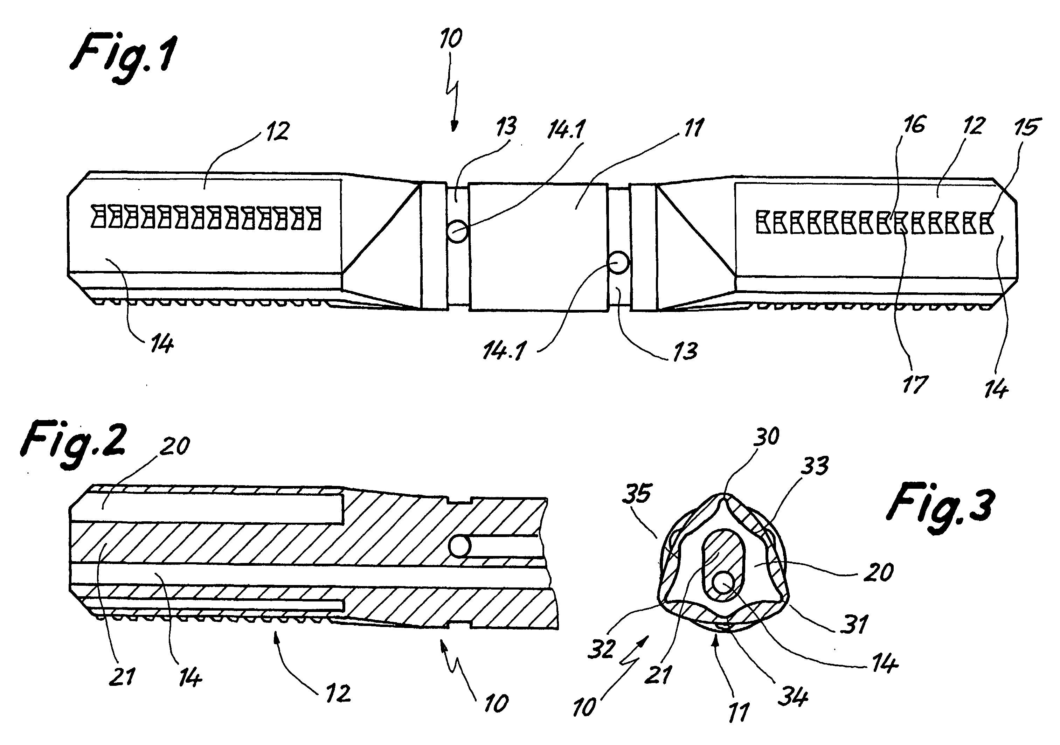

Fig. 1 zeigt ein Verbindungselement 10, insbesondere für Holzverbindungen, mit einem Mittelstück 11 und zwei Endstücken 12. Die Längsachse des Mittelstücks 11 und der beiden Endstücke 12 weisen zueinander einen Versatz auf. Durch diesen Versatz können Unterschiede von Bohrungsdurchmessern oder auch nicht fluchtenden Bohrungen zweier miteinander zu verbindender Teile ausgeglichen werden, da bei Einführung des Verbindungselements 10 in eine Bohrung eines Bauteils die Längsachse des Mittelstücks 11 an die Längsachse des Endstücks 12 herangedrückt wird. Dadurch entsteht ein kraftschlüssiger Presssitz. Außerdem stehen die beiden Endstücke 12 mit ihrem Umfang bereichsweise über den Umfang des Mittelstücks 11 vor. Durch eine radiale Deformierung der gegenüber dem Mittelstück 11 vorstehenden Bereiche des Endstücks 12 werden die zwischen den überstehenden Bereichen nicht vorstehenden Bereiche des Endstücks 12 an die Innenwand der Bohrung gepresst, wodurch eine maximale Reibung zwischen dem Verbindungselement und dem Bauteil hergestellt wird. Durch einen in eine umlaufende Nut 13 mündenden Kanal 14 bzw. 14.1 kann, nachdem ein Endstück 12 schon in eine Bohrung eines Bauteils eingetrieben worden ist, zwischen das Verbindungselement 10 und der hier nicht näher dargestellten Wandung des Bohrlochs Leim eingebracht werden. Anschließend kann der Leim auf Rippen 15 und in die Zwischenräume 16 zwischen den Rippen 15 aufgetragen werden. Alternativ kann der Leim zunächst in die Sackbohrung des zweiten zu verbindenden Werkstücks eingebracht werden. Beim Einschieben des zweiten Endstücks 12 in das zweite zu verbindende Bauteil wird dann der aufgetragene Leim in Richtung des Mittelstücks 11 transportiert. Um den Transport des Leims zu erleichtern, sind auf den Querrippen 15 Nuten 17 angebracht. Vorteilhafterweise sind die Querrippen 15 in den nicht vorstehenden Bereichen angebracht, die zwischen den bereichsweise über den Umfang des Mittelstücks vorstehenden Bereichen des Endstücks liegen. Somit dienen die Rippen 15 auch dem Verkrallen des Verhindlingselements 10 im Bohrloch.

Fig. 2 zeigt einen teilweisen Längsschnitt des Verbindungselements 1 aus Fig. 1. Zusätzlich zu dem Kanal 14 weist das Endstück 12 eine Sackbohrung 20 auf. Die Sackbohrung 20 erleichtert eine radiale Deformation der Endstücke 12, um sich optimal an die Innenwand der Bohrung anpressen zu können. Zwischen dem Kanal 14 und der Sackbohrung 20 liegt ein massiver Kernbereich 21. Der massive Kernbereich 21 versteift das Endstück 12, damit das Endstück 12 beim Eintreiben des Verbindungselements 10 in das Bohrloch nicht seitlich ausknicken kann.

Fig. 3 zeigt den Querschnitt des Verbindungselements 10. Hieraus ist ersichtlich, dass das Endstück 12 einen im Wesentlichen dreieckigen Querschnitt aufweist. Die Ecken 30, 31, 32 stehen seitlich über das Mittelstück 11 heraus. Führt man das Endstück 12 in eine Bohrung eines Bauteils ein, so werden die Ecken 30, 31, 32 nach innen gedrückt, wodurch die Seiten 33, 34, 35 nach außen gedrückt werden und somit gegen die Innenwand der Bohrung pressen. Durch diese Pressung der Seiten 33, 34, 35 wird eine kraftschlüssige Verbindung zwischen dem Verbindungselement 10 und der hier nicht näher dargestellten Bohrung hergestellt. Außerdem ist in Fig. 3 die Kontur des Sacklochs 20 erkennbar. Im Zentrum des Sacklochs 20 befindet sich der ovale Kern 21, in dessen Innerem der Kanal 14 verläuft.

## Patentansprüche

1. Verbindungselement (10), insbesondere für Holzverbindungen, mit einem Mittelstück (11) und zwei Endstücken (12), wobei die beiden Endstücke (12) mit ihrem Umfang bereichsweise über den Umfang des Mittelstücks (11) vorstehen, wobei das Verbindungselement (10) mindestens einen geschlossenen Kanal (14) und mindestens eine Nut (13, 17) zur Leimverteilung aufweist, wobei der Kanal (14) von einer in Längsrichtung des Verbindungselements (10) verlaufenden Sackbohrung gebildet ist, die in ihrem Endbereich in mindestens einen radial nach außen verlaufenden Kanal (14.1) mündet, wobei der nach außen verlaufende Kanal (14.1) in eine außen umlaufende Nut (13) mündet, und wobei die umlaufende Nut (13) im Mittelbereich (11) liegt.

2. Verbindungselement (10) nach Anspruch 1, **dadurch gekennzeichnet, dass** zwei umlaufende Nuten (13) im Mittelstück (11) ausgebildet sind.

3. Verbindungselement (10) nach Anspruch 1 bis 2, **dadurch gekennzeichnet, dass** die Endstücke (12) Querrippen (15) und/oder Noppen oder dergleichen aufweisen.

4. Verbindungselement (10) nach Anspruch 3, **dadurch gekennzeichnet, dass** die Querrippen (15) und/oder Noppen oder dergleichen an ihrer Oberfläche in Längsrichtung des Verbindungselements (10) Nuten (17) aufweisen.

5. Verbindungselement (10) nach einem der Ansprüche 1 bis 4, **dadurch gekennzeichnet, dass** die Endstücke (12) zusätzlich zu der in den radial nach außen verlaufenden Kanal (14.1) mündenden Sackbohrung (14) mindestens eine weitere Sackbohrung (20) aufweisen.

6. Verbindungselement (10) nach einem der Ansprüche 1 bis 5, **dadurch gekennzeichnet, dass** die beiden Endstücke (12) jeweils einen massiven Kernbereich (21) aufweisen.

7. Verbindungselement (10) nach einem der Ansprüche 1 bis 6, **dadurch gekennzeichnet, dass** die Endstücke (12) in radialer Richtung deformierbar sind.

8. Verbindungselement (10) nach einem der Ansprüche 1 bis 7, **dadurch gekennzeichnet, dass** die Endstücke (12) einen im Wesentlichen dreieckigen Querschnitt aufweisen.

9. Verbindungselement (10) nach einem der Ansprüche 1 bis 8, **dadurch gekennzeichnet, dass** die Längsachse des Mittelstücks (11) seitlich versetzt ist zu den Längsachsen der beiden Endstücke (12).

10. Verbindungselement (10) nach einem der Ansprüche 1 bis 9, **dadurch gekennzeichnet, dass** es mindestens bereichsweise eine raue Oberfläche aufweist.

## Claims

1. Connecting element (10), particularly one for wood connections, with a central piece (11) and two end pieces (12), whereby the two end pieces (12) project, with part of their periphery, over the periphery of the central piece (11), whereby the connecting element (10) has at least one closed channel (14) and at least one groove (13, 17) for the distribution of adhesive material, whereby the channel (14) is formed by a pocket hole, which opens into at least one channel (14.1) running radially outwards, running in the longitudinal direction of the connecting element (10), whereby the outwardly running channel (14.1) opens into a surrounding outer groove (13), and whereby the surrounding groove (13) is in the central area (11).

2. Connecting element (10) in accordance with claim 1, **characterized in that** there are two surrounding grooves (13) in the central piece (11).

3. Connecting element (10) in accordance with claims 1 and 2, **characterized in that** the end pieces (12) have chain marks and/or knubs or suchlike.

4. Connecting element (10) in accordance with claim 3, **characterized in that** the chain marks (15) and/or knubs or suchlike have, in the longitudinal direction of the connecting element (10), grooves (17) on their upper surface.

5. Connecting element (10) in accordance with one of claims 1 to 4, **characterized in that** the end pieces (12) have a further pocket hole (20) in addition to the pocket hole (14) opening into the channel (14.1) running radially outwards.

6. Connecting element (10) in accordance with one of claims 1 to 5, **characterized in that** the two end pieces (12) each have a solid core (21).

7. Connecting element (10) in accordance with one of claims 1 to 6, **characterized in that** the end pieces (12) can deform in a radial direction.

8. Connecting element (10) in accordance with one of claims 1 to 7, **characterized in that** the end pieces (12) have a substantially triangular cross-section.

9. Connecting element (10) in accordance with one of claims 1 to 8, **characterized in that** the longitudinal axis of the central piece (11) is laterally displaced in relation to the longitudinal axis of the two end pieces (12).

10. Connecting element (10) in accordance with one of claims 1 to 9, **characterized in that** it has an at least partially coarse surface.

## Revendications

1. Élément d'assemblage (10), en particulier pour des assemblages en bois, avec une pièce centrale (11) et deux pièces d'extrémité (12), les deux pièces d'extrémité (12) dépassant par endroits, avec leur périphérie, de la périphérie de la pièce centrale (11), l'élément d'assemblage (10) comportant au moins un canal fermé (14) et au moins une gorge (13, 17) pour la répartition de colle, le canal (14) étant formé par un perçage borgne qui s'étend dans la direction longitudinale de l'élément d'assemblage (10) et qui, dans sa zone extrême, débouche dans au moins un canal s'étendant radialement vers l'extérieur (14.1), le canal s'étendant radialement vers l'extérieur (14.1) débouchant dans une gorge périphérique extérieure (13), et la gorge périphérique (13) se trouvant dans la zone centrale (11).

2. Élément d'assemblage (10) selon la revendication 1, **caractérisé en ce que** deux gorges périphériques (13) sont ménagées dans la pièce centrale (11).

3. Élément d'assemblage (10) selon la revendication 1 à 2, **caractérisé en ce que** les pièces d'extrémité (12) comportent des nervures transversales (15) et/ou des plots ou analogues.

4. Élément d'assemblage (10) selon la revendication 3, **caractérisé en ce que** les nervures transversales (15) et/ou plots ou analogues comportent, sur leur surface, des gorges (17) dans la direction longitudinale de l'élément d'assemblage (10).

5. Élément d'assemblage (10) selon une des revendications 1 à 4, **caractérisé en ce que** les pièces d'extrémité (12) comportent, en plus du perçage borgne (14) débouchant dans le canal s'étendant radialement vers l'extérieur (14.1), au moins un autre perçage borgne (20).

6. Élément d'assemblage (10) selon une des revendications 1 à 5, **caractérisé en ce que** les deux pièces d'extrémité (12) comportent chacune une zone de coeur massive (21).

7. Élément d'assemblage (10) selon une des revendications 1 à 6, **caractérisé en ce que** les pièces d'extrémité (12) sont déformables dans la direction radiale.

8. Élément d'assemblage (10) selon une des revendications 1 à 7, **caractérisé en ce que** les pièces d'extrémité (12) présentent une section transversale sensiblement triangulaire.

9. Élément d'assemblage (10) selon une des revendications 1 à 8, **caractérisé en ce que** l'axe longitudinal de la pièce centrale (11) est décalé latéralement par rapport aux axes longitudinaux des deux pièces d'extrémité (12).

10. Élément d'assemblage (10) selon une des revendications 1 à 9, **caractérisé en ce qu'**il présente au moins par endroits une surface rugueuse.
